# EUROPEAN PATENT SPECIFICATION

(11) **EP 1 927 745 B1**
(45) Date of publication and mention of the grant of the patent: **01.08.2012**
(21) Application number: 06125042.9
(22) Date of filing: 29.11.2006
(51) Int. Cl.: F02K 1/12

(54) **Vectorable nozzle with pivotable triangular panels**
Schwenkbare Düse mit drehbaren Dreiecksplatten
Buse vectorisable avec panneaux triangulaires pivotables

(43) Date of publication of application: 04.06.2008
(73) Proprietor: GENERAL ELECTRIC COMPANY, Schenectady, NY 12345 (US)
(72) Inventor: MCCARDLE, Arthur, Cincinnati, OH 45246 (US); TOFFAN, Michael Jay, Mason, OH 45040 (US)
(74) Representative: Bedford, Grant Richard

(56) References cited:
- EP-A- 1 630 399
- US-A- 3 612 106
- US-A- 4 848 664
- US-A- 4 878 617

## Description

The invention relates to aircraft gas turbine engine two-dimensional vectoring nozzles and, more particularly, for such nozzles designed to shift center of nozzle exhaust flow sideways to effect vectoring.

Aircraft designers and particularly those designing high speed highly maneuverable military aircraft are constantly seeking better ways for controlling the aircraft and increasing its maneuverability in flight. These are needed for anti-aircraft missile avoidance and other combat maneuvers. Additionally, aircraft designers are trying to improve short take off and landing capabilities of aircraft. Exhaust systems, particularly for modern, high speed, military aircraft, have been adapted to provide a high degree of maneuverability over a wide variety of flight conditions including altitude, speed, and Mach number while maintaining cruise efficiency.

Aircraft maneuverability may be provided by aircraft control surfaces such as wing flaps or ailerons or vertical fins or rudders. Aircraft control surfaces, however, are somewhat limited in their effectiveness because of large differences in operational flight conditions such as air speed. Aircraft control surfaces also increase an aircraft's radar signature making it more vulnerable to anti-aircraft fire and missile. These control surfaces are attached to the airframe with hinges. The hinges and resulting hinge lines reflect enemy radar. During use, these control surfaces interrupt the aerodynamic shape of the airframe further amplifying the return of enemy radar.

It is, thus, highly desirable to provide an aircraft gas turbine engine with a thrust vectoring and low radar observability. It is also desirable to provide such a nozzle with a variable throat area (A8) and afterburning thrust augmentation (desirable for loaded takeoff and evasive maneuvers). It is also desirable to provide such a nozzle with the ability to vary the nozzle exit area (A9) as well to provide for A9/A8 variation to optimize performance over an aircraft's mission.

US 4 878 617 discloses a triple axis thrust vectoring exhaust nozzle for directing the flow of exhaust gas from an aircraft turbine engine comprising a convergent section and a divergent section each comprising hingedly connected planar members selectively positioned by actuators for defining deformable gas directing flow ducts. The nozzle has a hexagonal inlet.

The present invention provides a vectorable nozzle comprising: convergent and divergent sections in serial downstream flow relationship with a throat therebetween and extending aftwardly from a flow nozzle inlet to a nozzle outlet, triangular left and right side convergent upper panels pivotably mounted to a triangular convergent upper ramp in the convergent section along left and right side convergent angled hinge lines respectively, triangular left and right side divergent upper panels pivotably attached to a triangular divergent upper ramp in the divergent section along left and right side divergent angled hinge lines respectively, the left side convergent upper panel in sealing engagement with the left side divergent upper panel along a left side upper interface, and the right side convergent upper panel in sealing engagement with the right side divergent upper panel along a right side interface; further comprising: a nozzle center plane extending aftwardly from the nozzle inlet to the nozzle outlet, an unvectored throat plane normal to the nozzle center plane, heightwise spaced apart upper and lower walls outwardly bounding a nozzle flowpath of the nozzle and extending aftwardly through the convergent and divergent sections from the nozzle inlet to the nozzle outlet, the upper wall including the triangular pivotable left and right side convergent upper panels pivotable about left and right side leading edges of the left and right side convergent upper panels respectively in the convergent section, the left and right side upper interfaces being aligned in the unvectored throat plane when the throat is in an unvectored position, characterized in that the flow nozzle inlet is two-dimensional and rectangular, and the lower wall is fixed with respect to the nozzle inlet and includes in serial downstream relationship a fixed rectangular convergent lower ramp attached to a fixed divergent lower ramp.

In an exemplary embodiment of the nozzle, the left and right side divergent upper panels and the left and right side convergent upper panels outwardly bound a portion of a nozzle flowpath of the nozzle, the left side convergent and divergent upper panels are operable to pivot inwardly into the nozzle flowpath while the right side convergent and divergent upper panels pivot outwardly from the nozzle flowpath, and the left side convergent and divergent upper panels are operable to pivot outwardly from the nozzle flowpath while the right side convergent and divergent upper panels pivot inwardly into the nozzle flowpath. The convergent section may have a constant width and the divergent section may have an aftwardly diverging width. The left and right side convergent upper panels may have convergent trailing edges overlapping curved surfaces of divergent leading edges of the left and right side divergent upper panels, respectively.

A nozzle casing having left and right sidewalls may surround convergent and divergent sections and side edges of the left and right side convergent upper panels and the left and right side divergent upper panels may be in sealing engagement with convergent and divergent conically contoured portions of the left and right sidewalls in the convergent and divergent sections, respectively.

Another embodiment of the vectorable nozzle comprises the nozzle center plane extending aftwardly from the nozzle inlet to the nozzle outlet and an unvectored throat plane normal to the nozzle center plane. Heightwise spaced apart upper and lower walls outwardly bound a nozzle flowpath of the nozzle and extend aftwardly through the convergent and divergent sections from the nozzle inlet to the nozzle outlet. The left and right side upper interfaces are aligned in the unvectored throat plane when the throat is in an unvectored position. A pitch vectoring flap may be pivotably attached to the nozzle outlet at an aft end of the lower wall. One embodiment of the lower wall is fixed with respect to the nozzle inlet and, includes in serial downstream relationship, a fixed rectangular convergent lower ramp attached to a fixed divergent lower ramp.

Various aspects and embodiments of the present invention will now be described in connection with the accompanying drawings, in which:
FIG. 1 is a schematical cross-sectional view illustration of a vectorable nozzle for a gas turbine engine installed in an aircraft.
FIG. 2 is a partially cut-away perspective view illustration of the vectorable nozzle illustrated in FIG. 1.
FIG. 3 is a upwardly looking perspective view illustration of an upper wall through convergent and divergent sections of the vectorable nozzle illustrated in FIG. 2.
FIG. 4 is an upwardly looking planform view illustration of the upper wall illustrated in FIG. 3.
FIG. 5 is a perspective view illustration of the vectorable nozzle illustrated in FIG. 1.
FIG. 6 is aft looking forward view illustration of the vectorable nozzle in FIG. 1 illustrating a throat of the nozzle in an unvectored position.
FIG. 7 is aft looking forward view illustration of the vectorable nozzle in FIG. 1 illustrating a throat of the nozzle in a vectored position.
FIG. 8 is a schematical cross-sectional view illustration taken through the vectorable nozzle along 8-8 in FIG. 5.
FIG. 9 is a perspective view illustration of a fixed embodiment of a lower wall of the vectorable nozzle illustrated in FIG. 5.
FIG. 10 is a perspective view illustration of a variable lower wall of a vectorable nozzle which does not embody the invention as claimed.
FIG. 11 is a perspective view illustration of a second variable lower wall of a vectorable nozzle which does not embody the invention as claimed.
FIG. 12 is an upwardly looking planform view illustration of the lower wall illustrated in FIG. 11.
FIG. 13 is a schematical aft looking forward view illustration of a right side area of the skewed throat taken normal to the right side area of the skewed throat of the vectorable nozzle illustrated in FIG. 11.
FIG. 14 is a schematical aft looking forward view illustration of a left side area of the throat taken normal to the left side area of the throat of the vectorable nozzle illustrated in FIG. 11.
FIG. 15 is an upwardly looking planform view illustration of a third variable lower wall of a vectorable nozzle which does not embody the invention as claimed.
FIG. 16 is a schematical cross-sectional view illustration of the third variable lower wall illustrated in FIG. 15 taken along a section corresponding to 8-8 in FIG. 5.

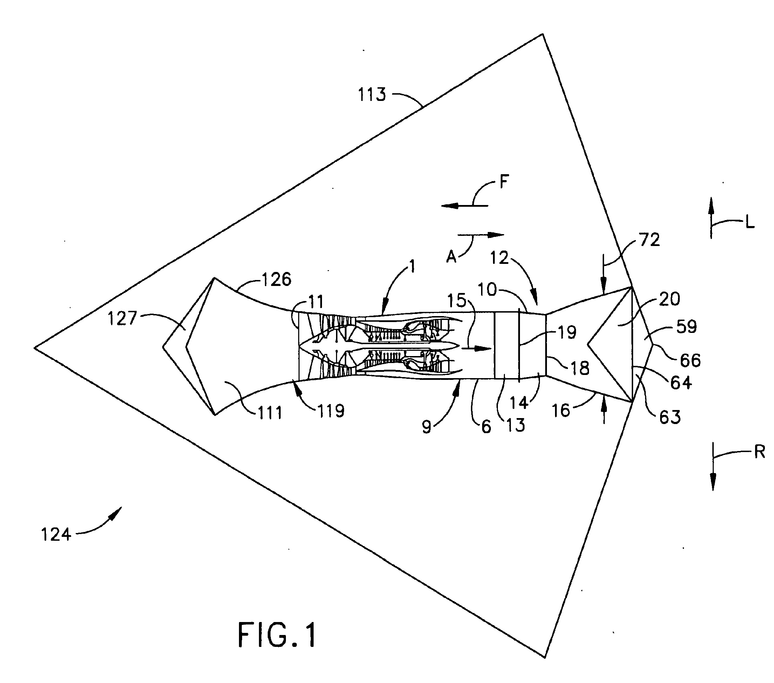

Schematically illustrated in cross-section in FIG. 1 is an exemplary embodiment of an aircraft 124 having a flush mounted engine air intake 127 connected to and in fluid communication with an aircraft thrust vectoring aircraft gas turbine engine 1 mounted within the aircraft's fuselage 113. An annular fan inlet 11 of the engine 1 is connected to the air intake 127 by an engine fixed inlet duct 126. An inlet duct passage 111 of the engine fixed inlet duct 126 may be two-dimensional terminating in transition section 119 between the inlet duct passage 111 and the axisymmetric annular fan inlet 11. A vectorable nozzle 12 located downstream of the engine 1 is operable to receive an exhaust flow 15 produced by the engine 1 and vector the exhaust flow 15 sideways.

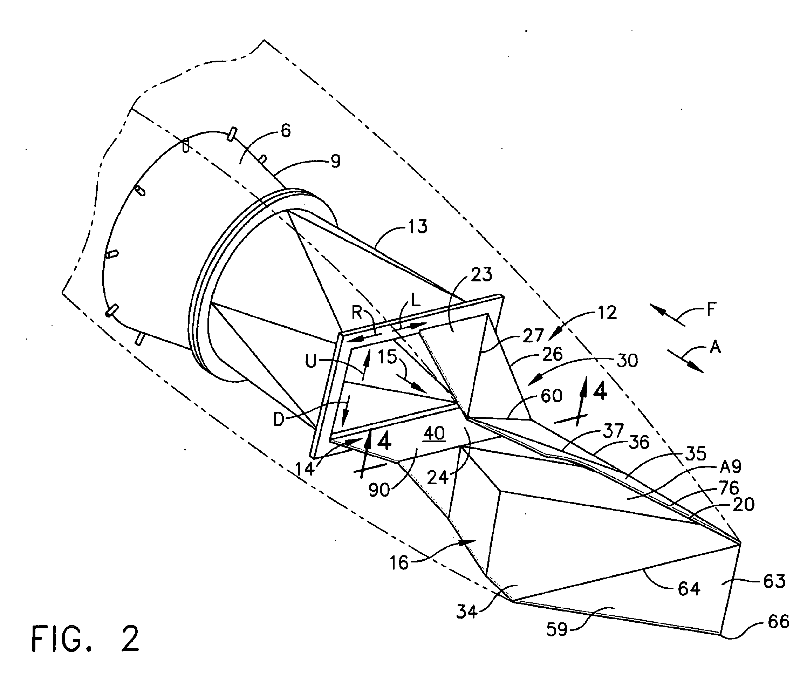

Illustrated in FIGS. 1 and 2 is an exemplary embodiment of the vectorable nozzle 12 fixedly connected to an aft end 6 of an engine casing 9 of the engine 1 by a transition duct 13. The transition duct 13 converts the exhaust flow 15 from one with a circular cross-section or axisymmetric exhaust flow 15 to one having a rectangular cross-section or two-dimensional (2D) exhaust flow 15. The nozzle 12 includes convergent and divergent sections 14 and 16 in serial flow relationship downstream of a two-dimensional flow nozzle inlet 19 at which the transition duct 13 terminates. A throat 18 is defined between the convergent and divergent sections 14 and 16 and the divergent section 16 terminates at a nozzle outlet 20.

Conventions used herein to describe the directions and frame of references for the flow and the movement of various nozzle elements include forward and aft directions F and A illustrated in FIGS. 1 and 2 by respective arrows. Sideway left and right L and R directions are illustrated by respective arrows from a frame of reference forward looking aft. Up and down directions U and D are illustrated in FIG. 2 by respective arrows. Upper and lower elements and right and left elements are used only for describing the nozzle within the illustrated reference frame and they may be reversed.

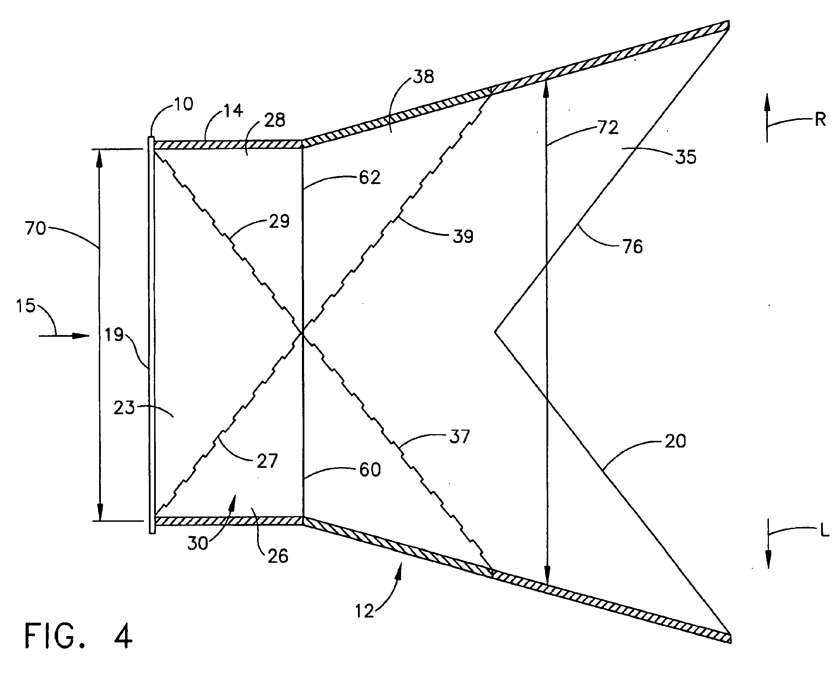

Referring to FIGS. 2-5, the vectorable nozzle 12 includes convergent and divergent sections 14 and 16 in serial downstream flow relationship with a throat 18 therebetween. The convergent section 14 of the exemplary embodiment of the vectorable nozzle 12 illustrated herein has a constant width 70 normal to the nozzle center plane 22 and the divergent section 16 has an aftwardly diverging width 72. The vectorable nozzle 12 extends aftwardly from a two-dimensional flow nozzle inlet 19 to a nozzle outlet 20. Heightwise spaced apart flowpath bounding upper and lower walls 30 and 32 outwardly bound a nozzle flowpath 40 of the nozzle 12 and extend aftwardly through the convergent and divergent sections 14 and 16 from the nozzle inlet 19 to the nozzle outlet 20.

The upper wall 30 includes triangular left and right side convergent upper panels 26 and 28 pivotably mounted to a triangular convergent upper ramp 23 in the convergent section 14 along left and right side convergent angled hinge lines 27 and 29, respectively. The upper wall 30 also has pivotable triangular left and right side divergent upper panels 36 and 38 pivotably attached to a chevron shaped divergent upper ramp 35 in the divergent section 16 along left and right side divergent angled hinge lines 37 and 39, respectively. The divergent section 16 includes a triangular trailing edge 76 defined in part by the chevron shaped divergent upper ramp 35 and defining at least in part the nozzle outlet 20.

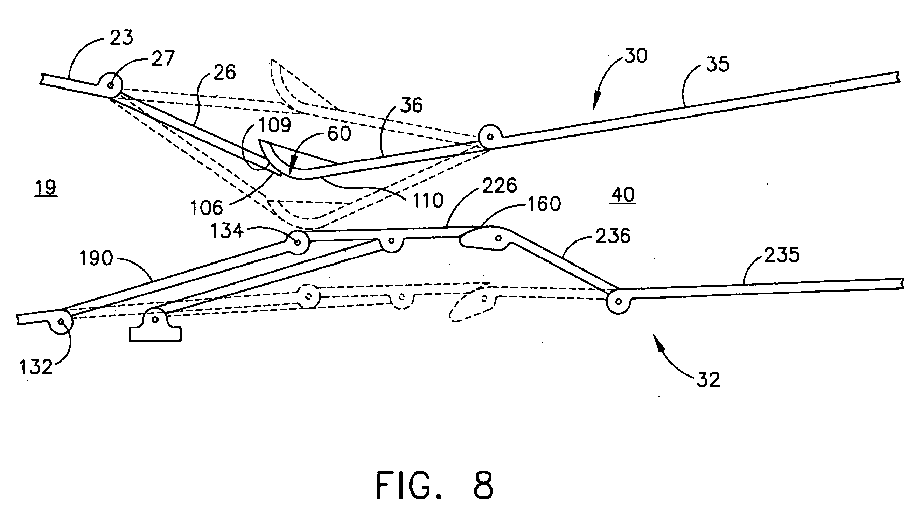

The left side convergent upper panel 26 is in sealing engagement with the left side divergent upper panel 36 along a left side interface 60. The right side convergent upper panel 28 is in sealing engagement with the right side divergent upper panel 38 along a right side interface 62. The left and right side convergent upper panels 26 and 28 have convergent trailing edges 106 overlapping curved surfaces 109 of divergent leading edges 110 of the left and right side divergent upper panels 36 and 38, respectively, as illustrated more particularly in FIGS. 2, 3, and 8.

During engine operation, higher pressure in the convergent section 14 than in the divergent section 16 keeps the convergent trailing edges 106 of the left and right side convergent upper panels 26 and 28 sealed against the divergent leading edges 110 of the left and right side divergent upper panels 36 and 38. The curved surfaces 109 of divergent leading edges 110 provides sealing engagement of the left and right side convergent upper panels 26 and 28 with the left and right side divergent upper panels 36 and 38 along the left and right side interfaces 60 and 62, respectively, through the full range of allowable pivoting motion of the left and right side convergent upper panels 26 and 28 and the left and right side divergent upper panels 36 and 38.

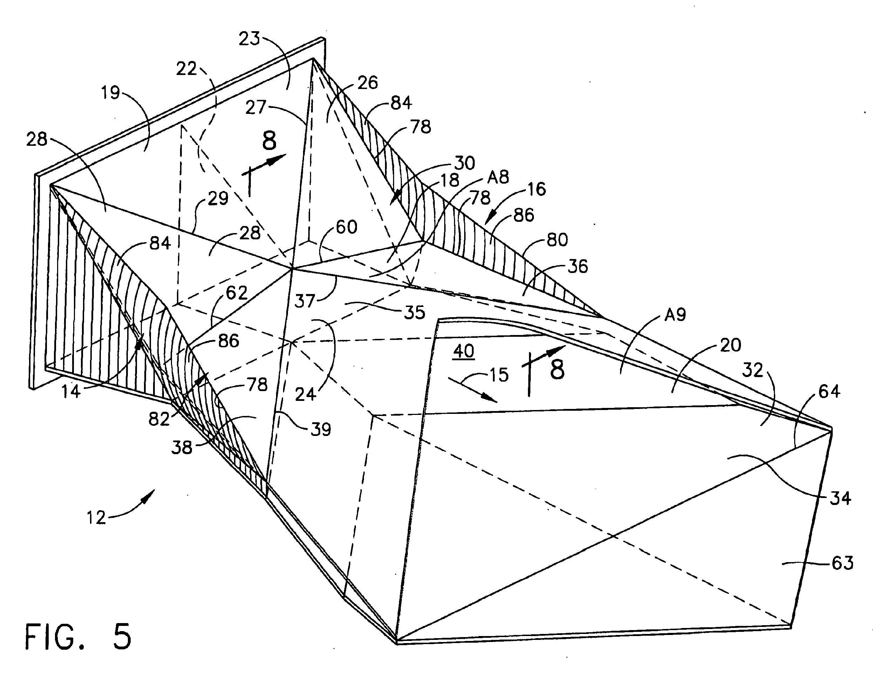

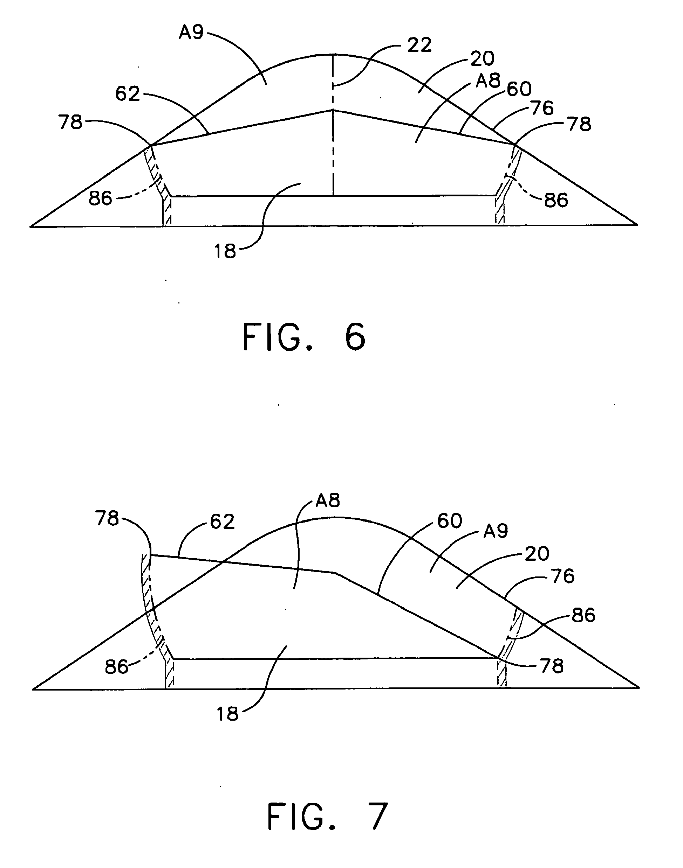

Referring to FIG. 5, a nozzle center plane 22 extends aftwardly from the nozzle inlet 19 to the nozzle outlet 20 and an unvectored throat plane 24 normal to the nozzle center plane 22. The left and right side interfaces 60 and 62 are aligned in the unvectored throat plane 24 when the throat 18 is in an unvectored position. A cross-section of the throat 18 in the unvectored position is illustrated in FIG. 6. The throat 18 is co-planar with the unvectored throat plane 24 and is symmetrical about the nozzle center plane 22.

The vectorable nozzle 12 vectors thrust in the yaw direction (right and left) by pivoting the upper panels inwardly and outwardly thus pivoting the left and right side interfaces 60 and 62 which define a shape of the throat 18. The left side convergent and divergent upper panels 26 and 36 and the left side interface 60 are operable to pivot inwardly into the nozzle flowpath 40 while the right side convergent and divergent upper panels 28 and 38 and the right side interface 62 pivot outwardly from the nozzle flowpath 40 as illustrated in FIG. 7. The left side convergent and divergent upper panels 26 and 36 and the left side interface 60 are also operable to pivot outwardly from the nozzle flowpath 40 while the right side convergent and divergent upper panels 28 and 38 and the right side interface 62 pivot inwardly into the nozzle flowpath 40.

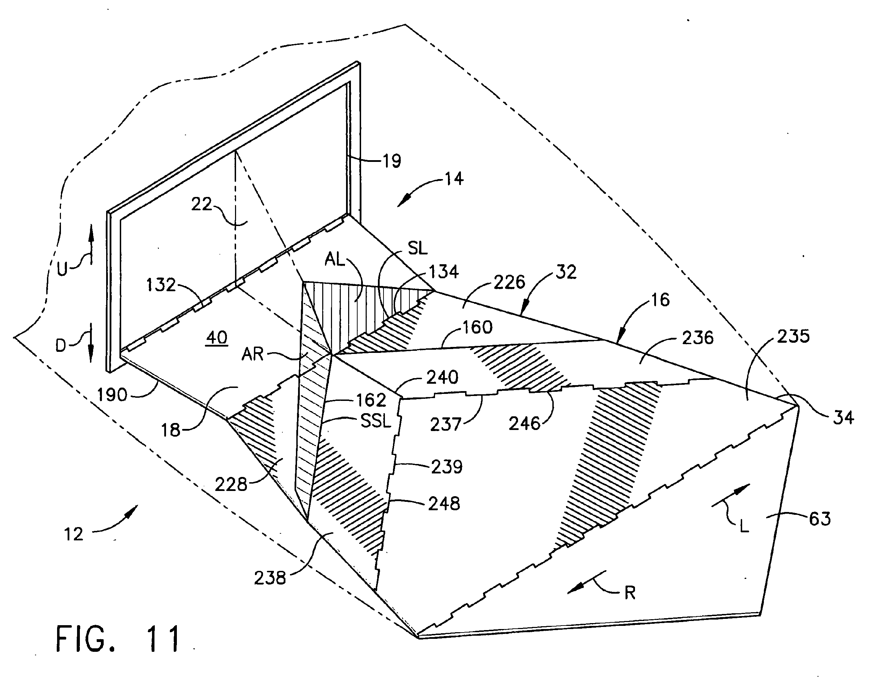

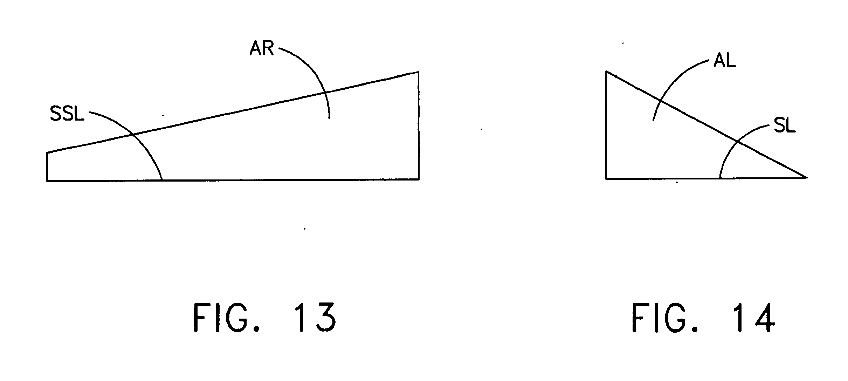

Pivoting the upper panels inwardly and outwardly provides sonic line yaw vectoring by skewing or relocating the nozzle throat position and obtain a favorable pressure distribution to provide yaw vectoring. Pivoting the left side convergent and divergent upper panels 26 and 36 inwardly while pivoting the right side convergent and divergent upper panels 28 and 38 outwardly simultaneously increases a right side area AR, illustrated in FIG. 13, of the throat 18 while simultaneously decreasing a left side area AL, illustrated in FIG. 14, of the throat an equal amount. Pivoting the left side convergent and divergent upper panels 26 and 36 outwardly while pivoting the right side convergent and divergent upper panels 28 and 38 inwardly simultaneously decreases the right side area AR of the throat 18 while simultaneously increasing the left side area AL of the throat an equal amount. During vectoring a total throat area A8, the sum of the right side area AR and the left side area AL of the throat 18, remains constant. The amount of vectoring increases as the side to side area (or mass flow) ratio AR/AL increases. During maximum vectoring the sonic line on the right side area AR moves aft to the right side divergent angled hinge line 39 as illustrated in FIG. 11

Referring to FIGS. 1, 2, 5, and 9, the exemplary embodiment of the vectorable nozzle 12 illustrated herein includes a pitch vectoring flap 63 pivotably attached to the nozzle outlet 20 at an aft end 34 of the lower wall 32. The vectoring flap 63 is operable to vector thrust in the pitch direction (up and down) when it is pivoted up or down. The vectoring flap 63 has a shape of a substantially equilateral triangle 59 with a base 64 pivotably attached to the nozzle outlet 20 at the aft end 34 of the lower wall 32 and extending aftwardly from the base 64 to an apex 66.

Referring to FIGS. 5, 6, and 7, the vectorable nozzle 12 includes a nozzle casing 10 surrounding the convergent and divergent sections 14 and 16 and having left and right sidewalls 80 and 82. Side edges 78 of the left and right side convergent upper panels 26 and 28 and the left and right side divergent upper panels 36 and 38 are in sealing engagement with convergent and divergent conically contoured portions 84 and 86 of the left and right sidewalls 80 and 82 in the convergent and divergent sections 14 and 16, respectively. The convergent and divergent conically contoured portions 84 and 86 are shaped or contoured to provide the sealing engagement with the left and right side convergent upper panels 26 and 28 and the left and right side divergent upper panels 36 and 38 as they pivot about the left and right side convergent angled hinge lines 27 and 29 and the left and right side divergent angled hinge lines 37 and 39, respectively.

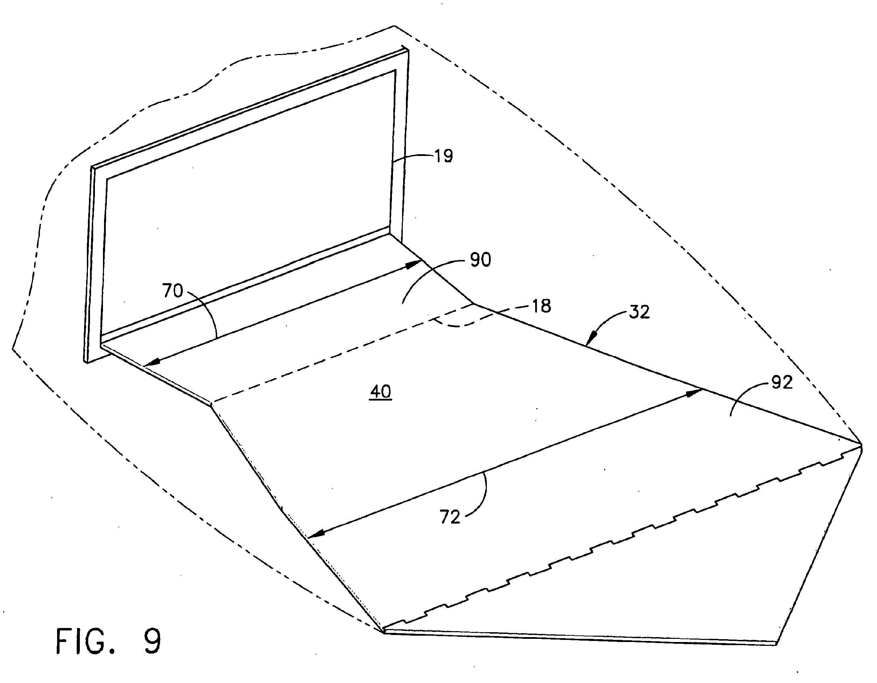

A fixed embodiment of the lower wall 32 is fixed from the nozzle inlet 19 to the nozzle outlet 20 as illustrated in FIG. 9. The fixed embodiment of the lower wall 32 includes in serial downstream relationship a fixed rectangular convergent lower ramp 90 attached to a fixed divergent lower ramp 92. The fixed nozzle inlet 19 and the fixed convergent and divergent lower ramps 90 and 92 are fixed with respect to the inlet 19 and the left and right sidewalls 80 and 82 of the nozzle 12. The convergent lower ramp 90 has the constant width 70 and the divergent lower ramp 92 has the aftwardly diverging width 72. This provides a fixed throat to exit area ratio A9/A8 defined as an exit area A9, illustrated in FIGS. 5 and 9, divided by the throat area A8 of the nozzle 12 illustrated in FIGS. 2 and 5.

This embodiment of the nozzle 12 can maintain a fixed throat to exit area ratio A9/A8 even during vectored operation because the left side convergent and divergent upper panels 26 and 36 and the left side interface 60 are operable to pivot inwardly into the nozzle flowpath 40 while the right side convergent and divergent upper panels 28 and 38 and the right side interface 62 pivot outwardly from the nozzle flowpath 40. Furthermore, the left side convergent and divergent upper panels 26 and 36 and the left side interface 60 are also operable to pivot outwardly from the nozzle flowpath 40 while the right side convergent and divergent upper panels 28 and 38 and the right side interface 62 pivot inwardly into the nozzle flowpath 40. Thus, by controlling the amount of pivot of the panels, this embodiment of the nozzle 12 can maintain the fixed exit to throat area ratio A9/A8 even during vectoring of the nozzle's thrust.

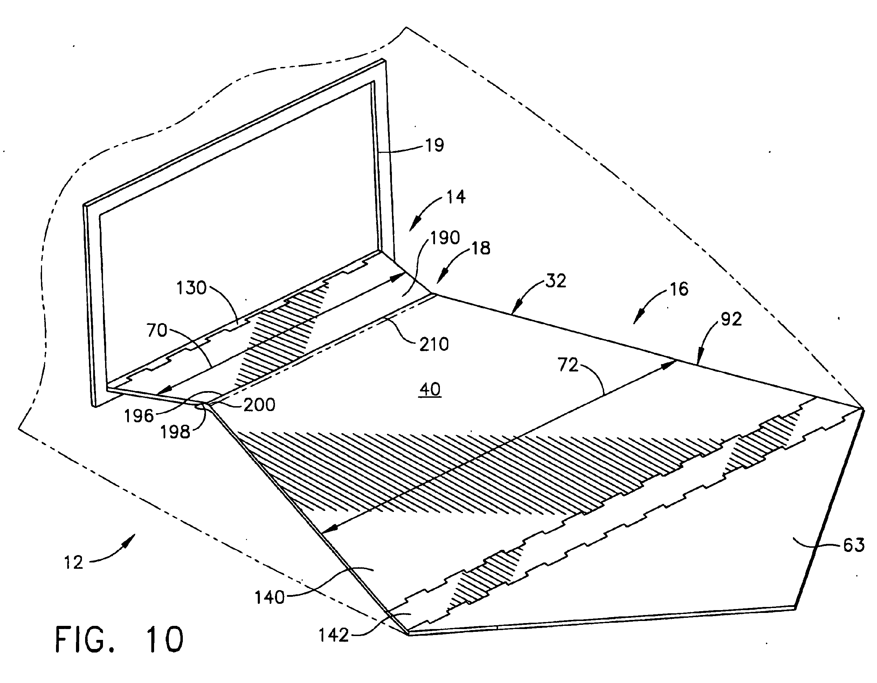

A first variable lower wall 32 extends from the nozzle inlet 19 to the nozzle outlet 20 as illustrated in FIG. 10, and this is outside the scope of the claimed invention. This variable embodiment of the lower wall 32 includes a pivotable rectangular convergent lower ramp 190 pivotably mounted, with respect to the nozzle inlet 19, along a linear convergent ramp hinge line 130. The variable embodiment of the lower wall 32 extends from the nozzle inlet 19 through the convergent section 14 to the throat 18 which is a variable area throat. The divergent lower ramp 92 is also variable having a pivotable forward section 140 pivotably connected to a fixed aft section 142. This provides a variable area throat to exit area ratio A8/A9. This embodiment of the nozzle 12 allows the throat area and thus the exit area ratio A8/A9 to be varied during vectored and unvectored operation. The convergent lower ramp 190 has the constant width 70 and the divergent lower ramp 92 has the aftwardly diverging width 72.

Referring to FIG. 10, the pivotable rectangular convergent lower ramp 190 has a lower convergent trailing edge 196 overlapping a lower curved surface 198 of a lower divergent leading edge 200 of the pivotable forward section 140 of the divergent lower ramp 92. During engine operation, higher pressure in the convergent section 14 than in the divergent section 16 keeps the lower convergent trailing edge 196 sealed against the lower curved surface 198 of a divergent leading edge 200 of the pivotable forward section 140 of the divergent lower ramp 92. The lower curved surface 198 of the lower divergent leading edge 200 of the pivotable forward section 140 of the divergent lower ramp 92 provides sealing engagement of the pivotable rectangular convergent lower ramp 190 with the pivotable forward section 140 of the divergent lower ramp 92 along a convergent divergent slidable interface 210 over the full range of allowable pivoting motion of the pivotable rectangular convergent lower ramp 190 and the pivotable forward section 140 of the divergent lower ramp 92.

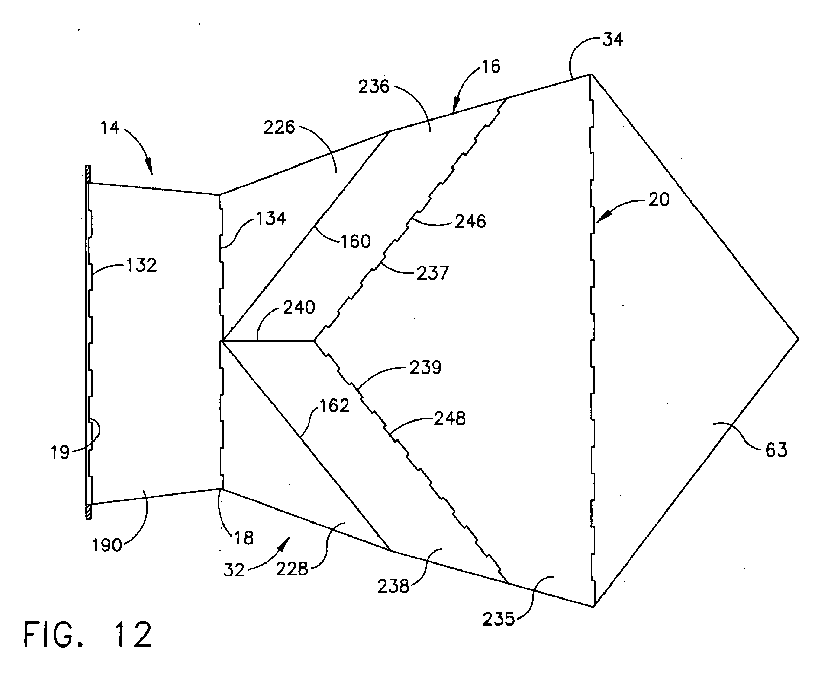

A second variable lower wall 32 extends from the nozzle inlet 19 to the nozzle outlet 20 as illustrated in FIGS. 11 and 12 and this is outside the scope of the claimed invention. This variable embodiment of the lower wall 32 includes a pivotable rectangular convergent lower ramp 190 pivotably mounted, with respect to the nozzle inlet 19, along a linear convergent ramp forward hinge line 132. The variable lower wall 32 includes triangular left and right side divergent lower panels 226 and 228 in the divergent section 16. The triangular left and right side divergent lower panels 226 and 228 are pivotably mounted to the pivotable rectangular convergent lower ramp 190 along a linear convergent ramp aft hinge line 134. The linear convergent ramp aft hinge line 134 is normal to the nozzle center plane 22 and generally defines the throat 18 along the lower wall 32 in an unvectored position of the nozzle 12.

The variable lower wall 32 also has pivotable parallelogram shaped left and right side aftwardly swept lower panels 236 and 238 pivotably attached to left and right side aftwardly swept leading edges 246 and 248 and along left and right side divergent angled hinge lines 237 and 239 of a fixed divergent lower ramp 235 in the divergent section 16, respectively. The pitch vectoring flap 63 is pivotably attached to the fixed divergent lower ramp 235 at the aft end 34 of the lower wall 32.

The left side divergent lower panel 226 is in sealing engagement with the left side aftwardly swept lower panel 236 along a left side lower interface 160. The right side divergent lower panel 228 is in sealing engagement with the right side aftwardly swept lower panel 238 along a right side lower interface 162. The left and right side aftwardly swept lower panels 236 and 238 are in sealing engagement with each other along a center interface 240. This configuration allows the nozzle 12 to have a bit more vectoring as opposed to the nozzle 12 with the first two embodiments of the lower wall 32. Note the larger right side area AR of the throat 18 in FIG. 11.

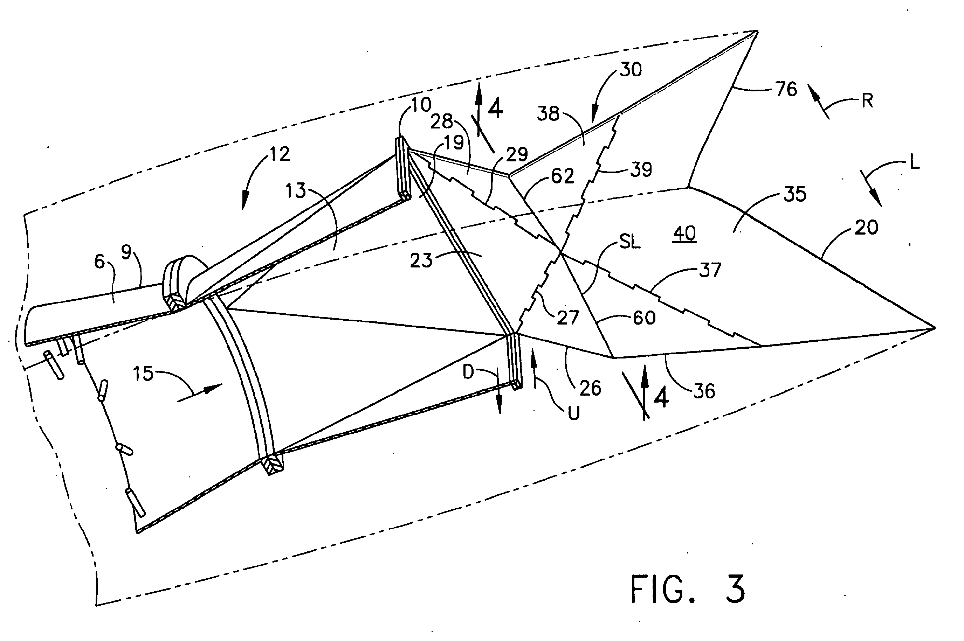

The amount of vectoring increases as the side to side area (or mass flow) ratio AR/AL increases. As the nozzle 12 is moved further toward maximum vectoring, the sonic line SL, illustrated in FIG. 3, on the increasing side moves farther aft or downstream towards the left side divergent angled hinge line 37 on the upper wall 30 and the right side lower interface 162. Even if the sonic line SL is skewed on only half of the nozzle, the larger percentage of mass flow passes over a skewed sonic line SSL, as illustrated in FIG. 13, since the opposite half flow area has been reduced. The larger mass flow on the skewed half, on the right side area AR, dominates the direction of exiting nozzle mass flow and provides yaw vectoring.

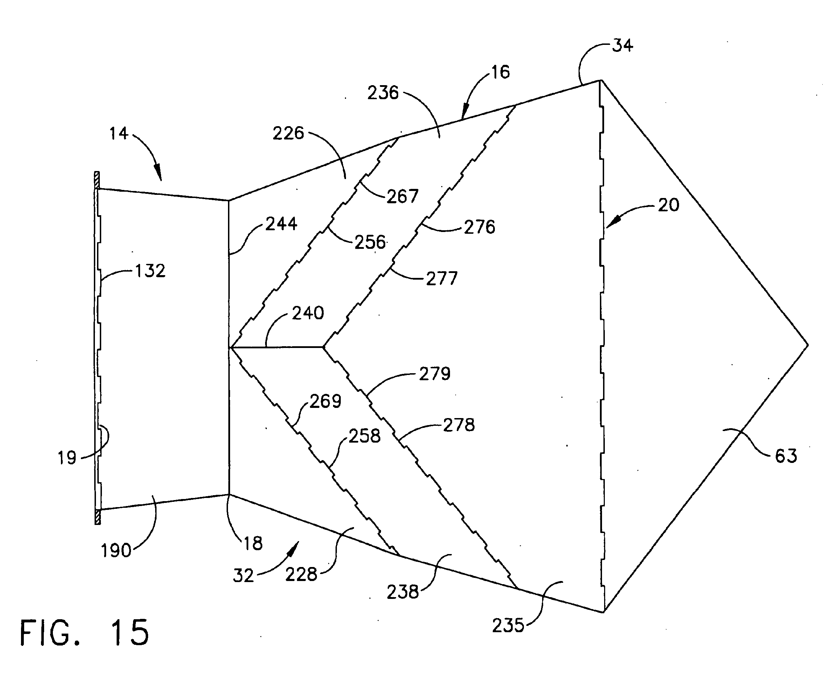

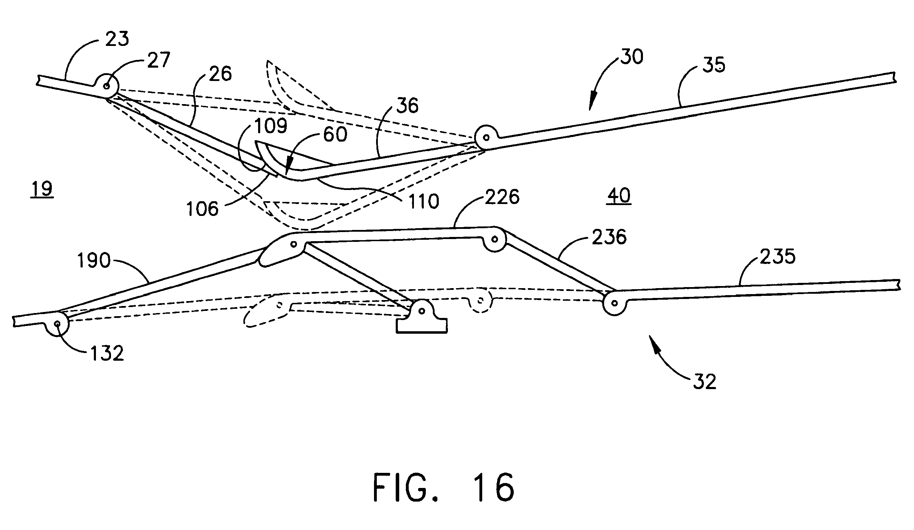

A third variable lower wall 32 extends from the nozzle inlet 19 to the nozzle outlet 20 as illustrated in FIGS. 15 and 16 and this is outside the scope of the claimed invention. This variable embodiment of the lower wall 32 is similar to the one illustrated in FIGS. 11 and 12 but the triangular left and right side divergent lower panels 226 and 228 are pivotably mounted to the parallelogram shaped left and right side aftwardly swept lower panels 236 and 238 by left and right side divergent angled first hinge lines 267 and 269 along left and right side aftwardly swept first leading edges 256 and 258 respectively. The left and right side divergent and convergent lower panels 226 and 236 are in sealing engagement with the pivotable rectangular convergent lower ramp 190 along a linear convergent ramp aft interface 244. The pivotable parallelogram shaped left and right side aftwardly swept lower panels 236 and 238 are pivotably attached to left and right side aftwardly swept second leading edges 276 and 278 and along left and right side divergent second angled hinge lines 277 and 279 of the fixed divergent lower ramp 235 in the divergent section 16, respectively.

The pivotable panels between the sidewalls within the vectorable nozzle provide an aircraft gas turbine engine with a thrust vectoring and low radar observability. The nozzle disclosed herein also can have a variable throat area (A8) and afterburning thrust augmentation for loaded takeoff and evasive maneuvers. The nozzle also has the ability to vary the nozzle exit area (A9) as well to provide for A9/A8 variation to optimize performance over an aircraft's mission.

The present invention has been described in an illustrative manner. It is to be understood that the terminology which has been used is intended to be in the nature of words of description rather than of limitation. While there have been described herein, what are considered to be preferred and exemplary embodiments of the present invention, other modifications of the invention shall be apparent to those skilled in the art from the teachings herein and, it is, therefore, desired to be secured in the appended claims all such modifications.

### PARTS LIST

1. aircraft gas turbine engine
6. aft end
9. engine casing
10. nozzle casing
11. fan inlet
12. vectorable nozzle
13. transition duct
14. convergent section
15. exhaust flow
16. divergent section
18. throat
19. nozzle inlet
20. nozzle outlet
22. nozzle center plane
23. convergent upper ramp
24. throat plane
26. left side convergent upper panel
27. left side convergent angled hinge line
28. right side convergent upper panel
29. right side convergent angled hinge line
30. upper wall
32. lower wall
34. aft end
35. divergent upper ramp
36. left side divergent upper panel
37. left side divergent angled hinge line
38. right side divergent upper panel
39. right side divergent angled hinge line
40. nozzle flowpath
59. equilateral triangle
60. left side interface
62. right side interface
63. vectoring flap
64. base
66. apex
70. constant width
72. aftwardly diverging width
76. triangular trailing edge
78. side edges
80. left sidewall
82. right sidewall
84. convergent conically contoured portion
86. divergent conically contoured portion
90. convergent lower ramp
92. divergent lower ramp
106. convergent trailing edges
109. curved surfaces
110. divergent leading edges
111. inlet duct passage
113. aircraft's fuselage
119. transition section
124. aircraft
126. inlet duct
127. engine air intake
130. convergent ramp hinge line
132. convergent ramp forward hinge line
134. convergent ramp aft hinge line
140. forward section
142. aft section
160. left side lower interface
162. right side lower interface
190. pivotable rectangular convergent lower ramp
196. lower convergent trailing edge
198. lower curved surface
200. lower divergent leading edge
210. convergent divergent slidable interface
226. left side divergent lower panel
228. right side divergent lower panel
235. divergent lower ramp
236. left side aftwardly swept lower panel
237. left side divergent angled hinge line
238. right side aftwardly swept lower panel
239. right side divergent angled hinge line
240. center interface
244. linear convergent ramp aft interface
246. left side aftwardly swept leading edge
248. right side aftwardly swept leading edge
256. left side aftwardly swept first leading edge
258. right side aftwardly swept first leading edge
267. left side divergent angled first hinge line
269. right side divergent angled first hinge line
276. left side aftwardly swept second leading edge
278. right side aftwardly swept second leading edge
277. left side divergent angled second hinge line
279. right side divergent angled second hinge line
A - aft direction
F - forward direction
L - sideway left direction
R - sideway right direction
U - up direction
D - down direction
AR - right side area
AL - left side area
A8 - throat area
A9 - exit area
SL - sonic line
SSL - skewed sonic line

## Claims

1. A vectorable nozzle (12) comprising:
convergent and divergent sections (14 and 16) in serial downstream flow relationship with a throat (18) therebetween and extending aftwardly from a flow nozzle inlet (19) to a nozzle outlet (20),
triangular left and right side convergent upper panels (26 and 28) pivotably mounted to a triangular convergent upper ramp (23) in the convergent section (14) along left and right side convergent angled hinge lines (27 and 29) respectively,
triangular left and right side divergent upper panels (36 and 38) pivotably attached to a triangular divergent upper ramp (35) in the divergent section (16) along left and right side divergent angled hinge lines (37 and 39) respectively,
the left side convergent upper panel (26) in sealing engagement with the left side divergent upper panel (36) along a left side upper interface (60), and
the right side convergent upper panel (28) in sealing engagement with the right side divergent upper panel (38) along a right side upper interface (62);
further comprising:
a nozzle center plane (22) extending aftwardly from the nozzle inlet (19) to the nozzle outlet (20),
an unvectored throat plane (24) normal to the nozzle center plane (22),
heightwise spaced apart upper and lower walls (30 and 32) outwardly bounding a nozzle flowpath (40) of the nozzle (12) and extending aftwardly through the convergent and divergent sections (14 and 16) from the nozzle inlet (19) to the nozzle outlet (20),
the upper wall (30) including the triangular pivotable left and right side convergent upper panels (26 and 28) pivotable about left and right side leading edges of the left and right side convergent upper panels (26 and 28) respectively in the convergent section (14), the left and right side upper interfaces (60 and 62) being aligned in the unvectored throat plane (24) when the throat (18) is in an unvectored position,
**characterized in that** the flow nozzle inlet (19) is two-dimensional and rectangular, and the lower wall (32) is fixed with respect to the nozzle inlet (19) and includes in serial downstream relationship a fixed rectangular convergent lower ramp (90) attached to a fixed divergent lower ramp (92).

2. A vectorable nozzle (12) as claimed in claim 1,
the left and right side divergent upper panels (36 and 38) and the left and right side convergent upper panels (26 and 28) outwardly bounding a portion of a nozzle flowpath (40) of the nozzle (12),
the left side convergent and divergent upper panels (26 and 36) being operable to pivot inwardly into the nozzle flowpath (40) while the right side convergent and divergent upper panels (28 and 38) pivot outwardly from the nozzle flowpath (40), and
the left side convergent and divergent upper panels (26 and 36) being operable to pivot outwardly from the nozzle flowpath (40) while the right side convergent and divergent upper panels (28 and 38) pivot inwardly into the nozzle flowpath (40).

3. A vectorable nozzle (12) as claimed in claim 1 or claim 2, further comprising the left and right side convergent upper panels (26 and 28) having convergent trailing edges (106) overlapping curved surfaces (109) of divergent leading edges (110) of the left and right side divergent upper panels (36 and 38) respectively.

4. A vectorable nozzle (12) as claimed in any preceding claim further comprising the divergent section (16) including a triangular trailing edge (76) defining at least in part the nozzle outlet (20).

5. A vectorable nozzle (12) as claimed in claim 2, or any claim dependent thereon, further comprising:
convergent and divergent sections (14 and 16) and between left and right sidewalls (80 and 82), and
side edges (78) of the left and right side convergent upper panels (26 and 28) and the left and right side divergent upper panels (36 and 38) in sealing engagement with convergent and divergent conically contoured portions (84 and 86) of the left and right sidewalls (80 and 82) in the convergent and divergent sections (14 and 16) respectively.

6. A vectorable nozzle (12) as claimed in any of the preceding claims, further comprising a pitch vectoring flap (63) pivotably attached to the nozzle outlet (20) at an aft end (34) of the lower wall (32).

## Patentansprüche

1. Schwenkdüse (12), aufweisend:
konvergente und divergente Abschnitte (14 und 16) in serieller Stromabwärts-Strömungsbeziehung zu einem Hals (18) dazwischen und sich nach hinten von einem Strömungsdüseneinlass (19) zu einem Düsenauslass (20) erstreckend,
dreieckige links- und rechtsseitige konvergente obere Platten (26 und 28), die drehbar an einer dreieckigen konvergenten oberen Rampe (23) in dem konvergenten Abschnitt (14) entlang links- bzw. rechtsseitig konvergenten angewinkelten Gelenklinien (27 und 29) montiert sind,
dreieckige links- und rechtsseitige divergente obere Platten (36 und 38), die drehbar an einer dreieckigen konvergenten oberen Rampe (35) in dem divergenten Abschnitt (16) entlang links- bzw. rechtsseitig divergenten angewinkelten Gelenklinien (37 und 39) angebracht sind,
wobei die linksseitige konvergente obere Platte (26) in Dichtungseingriff mit der linksseitigen divergenten oberen Platte (36) entlang einer linksseitigen oberen Schnittstelle (60) steht, und
die rechtsseitige konvergente obere Platte (28) in Dichtungseingriff mit der rechtsseitigen divergenten oberen Platte (38) entlang einer rechtsseitigen oberen Schnittstelle (62) steht;
ferner aufweisend:
eine Düsenmittenebene (22), die sich von dem Düseneinlass (19) zu dem Düsenauslass (20) nach hinten erstreckt,
eine ungerichtete Halsebene (24) senkrecht zu der Düsenmittenebene (22),
in der Höhe in Abstand angeordnete obere und untere Wände (30 und 32), die einen Düsenströmungspfad (40) der Düse (12) nach außen begrenzen und sich nach hinten durch die konvergenten und divergenten Abschnitte (14 und 16) von dem Düseneinlass (19) zu dem Düsenauslass (20) erstrecken,
wobei die obere Wand (30) die dreieckigen drehbaren links- und rechtsseitigen konvergenten oberen Platten (26 und 28) enthält, die um links- bzw. rechtsseitige Vorderkanten der links- und rechtsseitigen konvergenten oberen Platten (26 und 28) in dem konvergenten Abschnitt (14) drehbar sind, wobei die links- und rechtsseitigen oberen Schnittstellen (60 und 62) in der ungerichteten Halsebene (24) ausgerichtet sind, wenn sich der Hals (18) in einer ungerichteten Position befindet,
**dadurch gekennzeichnet, dass** der Strömungsdüseneinlass (19) zweidimensional und rechteckig ist, und die untere Wand (32) in Bezug auf den Düseneinlass (19) fixiert ist und in serieller Stromabwärtsbeziehung eine feststehende rechteckige konvergente untere Rampe (90) enthält, die an einer feststehenden divergenten unteren Rampe (92) angebracht ist.

2. Schwenkdüse (12) nach Anspruch 1, wobei
die links- und rechtsseitigen divergenten oberen Platten (36 und 38) und die links- und rechtsseitigen konvergenten oberen Platten (26 und 28) einen Abschnitt eines Düsenströmungspfades (40) der Düse (12) nach außen begrenzen,
wobei die linksseitigen konvergenten und divergenten oberen Platten (26 und 36) so betätigt werden können, dass sie nach innen in den Düsenströmungspfad (40) drehen, während die rechtsseitigen konvergenten und divergenten oberen Platten (28 und 38) von dem Düsenströmungspfad (40) nach außen drehen, und
die linksseitigen konvergenten und divergenten oberen Platten (26 und 36) so betätigt werden können, dass sie von dem Düsenströmungspfad (40) nach außen drehen, während die rechtsseitigen konvergenten und divergenten oberen Platten (28 und 38) in den Düsenströmungspfad (40) nach innen drehen.

3. Schwenkdüse (12) nach Anspruch 1 oder Anspruch 2, welche ferner die links- und rechtsseitigen konvergenten oberen Platten (26 und 28) mit konvergenten Hinterkanten (106) aufweist, die gekrümmte Oberflächen (109) von divergenten Vorderkanten (110) der links- bzw. rechtsseitigen divergenten oberen Platten (36 und 38) überlappen.

4. Schwenkdüse (12) nach einem der vorstehenden Ansprüche, welche ferner den divergenten Abschnitt (16) mit einer dreieckigen Hinterkante (76) enthält, die wenigstens teilweise den Düsenauslass (50) definiert.

5. Schwenkdüse (12) nach Anspruch 2, ferner aufweisend:
konvergente und divergente Abschnitte (14 und 16) und zwischen linken und rechten Seitenwänden (80 und 82), und
Seitenränder (78) der links- und rechtsseitigen konvergenten oberen Platten (26 und 28) und der links- und rechtsseitigen divergenten oberen Platten (36 und 38) in Dichtungseingriff mit konvergenten und divergenten konisch konturierten Abschnitten (84 und 86) der links- und rechtsseitigen Seitenwände (80 und 82) in den konvergenten bzw. divergenten Abschnitten (14 und 16).

6. Schwenkdüse (12) nach einem der vorstehenden Ansprüche, ferner mit einer Anstellschwenkklappe (63), die drehbar an dem Düsenauslass (20) und an einem hinteren Ende (34) der unteren Wand (32) angebracht ist.

## Revendications

1. Tuyère vectorisable (12), comprenant :
des sections convergentes et divergentes (14 et 16) en relation d'écoulement en aval en série avec un col (18) entre celles-ci et s'étendant vers l'arrière, depuis une entrée (19) de la tuyère d'écoulement vers une sortie (20) de la tuyère ;
des panneaux supérieurs convergents, côtés gauche et droite, triangulaires (26 et 28), montés à pivotement sur une rampe supérieure convergente, triangulaire (23), dans la section convergente (14), le long d'axes d'articulation angulaires, convergents, côtés gauche et droite (27 et 29), respectivement ;
des panneaux supérieurs divergents, côtés gauche et droite, triangulaires (36 et 38), fixés à pivotement sur une rampe supérieure divergente, triangulaire (35), dans la section divergente (16), le long d'axes d'articulation angulaires, divergents, côtés gauche et droite (37 et 39), respectivement ;
le panneau supérieur convergent, côté gauche (26) en prise d'étanchéité avec le panneau supérieur divergent, côté gauche (36), le long d'une interface supérieure, côté gauche (60) et
le panneau supérieur convergent, côté droite (28), en prise d'étanchéité avec le panneau supérieur divergent, côté droite (38), le long d'une interface, côté droite (62) ;
comprenant, en outre :
un plan central (22) de la tuyère, s'étendant vers l'arrière, depuis l'ouverture (19) de la tuyère vers la sortie (20) de la tuyère ;
un plan de col non vectorisé (24), perpendiculaire au plan central (22) de la tuyère ;
des parois supérieure et inférieure, espacées en hauteur (30 et 32), limitant vers l'extérieur une voie d'écoulement (40) de la tuyère (12) et s'étendant vers l'arrière, à travers les sections convergentes et divergentes (14 et 16), depuis l'ouverture (19) de la tuyère vers la sortie (20) de la tuyère,
la paroi supérieure (30) comportant les panneaux supérieurs convergents, côtés gauche et droite, pouvant pivoter, triangulaires (26 et 28), pouvant pivoter autour des bords d'attaque, côtés gauche et droite, des panneaux supérieurs convergents, côtés gauche et droite (26 et 28), respectivement, dans la section convergente (14), les interfaces supérieures, côtés gauche et droite (60 et 62) étant alignées dans le plan de col non vectorisé (24), lorsque le col (18) est dans une position non vectorisée,
**caractérisée en ce que** l'ouverture (19) de la tuyère d'écoulement est bidimensionnelle et rectangulaire et la paroi inférieure (32) est fixe par rapport à l'ouverture (19) de la tuyère et comporte, en relation vers l'aval, en série, une rampe inférieure convergente, rectangulaire, fixe (90), fixée à une rampe inférieure divergente, fixe (92).

2. Tuyère vectorisable (12), selon la revendication 1,
les panneaux supérieurs divergents, côtés gauche et droite (36 et 38) et les panneaux supérieurs convergents, côtés gauche et droite (26 et 28) limitant vers l'extérieur une partie d'une voie d'écoulement (40) de la tuyère (12) ;
les panneaux supérieurs convergents et divergents, côté gauche (26 et 36) étant utilisables pour pivoter vers l'intérieur, dans la voie d'écoulement (40) de la tuyère, tandis que les panneaux supérieurs convergents et divergents, côté droite (28 et 38) pivotent vers l'extérieur, depuis la voie d'écoulement (40) de la tuyère et
les panneaux supérieurs convergents et divergents, côté gauche (26 et 36) étant utilisables pour pivoter vers l'extérieur, depuis la voie d'écoulement (40) de la tuyère, tandis que les panneaux supérieurs convergents et divergents, côté droite (28 et 38) pivotent vers l'intérieur, dans la voie d'écoulement (40) de la tuyère.

3. Tuyère vectorisable (12), selon la revendication 1 ou la revendication 2, comprenant, en outre, les panneaux supérieurs convergents, côtés gauche et droite (26 et 28) qui ont des bords de fuite convergents (106) qui chevauchent des surfaces recourbées (109) de bords d'attaque divergents (110) des panneaux supérieurs divergents, côtés gauche et droite (36 et 38), respectivement.

4. Tuyère vectorisable (12), selon une revendication précédente quelconque, comprenant, en outre, la section divergente (16) qui comporte un bord de fuite triangulaire (76), qui définit, au moins en partie, la sortie (20) de la tuyère.

5. Tuyère vectorisable (12), selon la revendication 2 ou toute revendication qui en dépend, comprenant, en outre :
des sections convergentes et divergentes (14 et 16) et entre des parois latérales gauches et droites (80 et 82) et
des bords latéraux (78) des panneaux supérieurs convergents,
côtés gauche et droite (26 et 28) et les panneaux supérieurs divergents, côtés gauche et droite (36 et 38) en prise d'étanchéité avec des parties, profilées coniquement, convergentes et divergentes (84 et 86) des parois latérales gauche et droite (80 et 82) dans les sections convergentes et divergentes (14 et 16), respectivement.

6. Tuyère vectorisable (12), selon l'une quelconque des revendications précédentes, comprenant, en outre, un volet de guidage de pas (63), fixé à pivotement sur la sortie (20) de la tuyère, à une extrémité arrière (34) de la paroi inférieure (32).
